Europäisches Patentamt

European Patent Office

Office européen des brevets

(19)

Veröffentlichungsnummer: **0 298 324**
**A2**

## (12) EUROPÄISCHE PATENTANMELDUNG

(21) Anmeldenummer: 88110149.7

(22) Anmeldetag: 24.06.88

(51) Int. Cl.⁴ **F16J 15/34**

(30) Priorität: 06.07.87 DE 3722303

(43) Veröffentlichungstag der Anmeldung:
**11.01.89 Patentblatt 89/02**

(84) Benannte Vertragsstaaten:
**AT BE CH DE FR GB IT LI NL**

(71) Anmelder: **Feodor Burgmann Dichtungswerke GmbH & Co.**
**Äussere Sauerlacher Strasse 6-8**
**D-8190 Wolfratshausen 1(DE)**

(72) Erfinder: **Kollinger, Rudolf, Dipl.-Ing.**
**Richard-Wagner-Strasse 10**
**D-8034 Germering(DE)**
Erfinder: **Nosowicz, Josef, Dr., Dipl.-Ing.**
**Richard-Wagner-Strasse 1**
**D-8192 Geretsried(DE)**
Erfinder: **Zeus, Dieter, Dr., Dipl.-Ing.**
**Irschenhauser Strasse 6**
**D-8021 Icking(DE)**

(74) Vertreter: **Empl, Karl et al**
**Patentanwälte Dipl.-Ing. K. Empl Dipl.-Ing.,**
**Dipl.-Wirtsch.-Ing. K. Fehners**
**Schumannstrasse 2**
**D-8000 München 80(DE)**

(54) **Gleitringdichtung zur Abdichtung eines gasförmigen Mediums.**

(57) Die Gleitringdichtung enthält einen fest und abdichtend an einer Wandung (2) gehaltenen ersten Ringkörper (3) mit einer ebenen kreisförmigen ersten Stirnfläche (5) und einem drehfest und abdichtend an einer Welle (1) gehaltenen, in Axialrichtung verschiebbaren und durch Federn (4) gegen den ersten Ringkörper (3) vorgespannten zweiten Ringkörper (7), dessen gleichfalls ebene, kreisringförmige zweite Stirnfläche (6) an der ersten Stirnfläche (5) mit einer gemeinsamen ringförmigen Dichtfläche (Berührungsfläche) anliegt. Aus der zweiten Stirnfläche (6) sind gleichgeformte, unter gleichen Winkelabständen angeordnete spiralförmig verlaufende Nuten (10) herausgearbeitet, die sich zwischen die Dichtflächen erstrecken und mit ihren inneren Enden Abstand zu der inneren Begrenzungslinie der Dichtfläche einhalten. Durch eine relative Drehbewegung wird zwischen die Dichtflächen ein gasförmiges Medium eingeschleppt und ein die Dichtflächen trennendes Druckpolster aufgebaut. Zwecks Verstärkung dieses Druckpolsters nimmt die Tiefe und Breite

jeder Nut (10) vom äußeren zum inneren Ende kontinuierlich ab und geht die Nutbegrenzungsfläche (11a) an ihrer hinten liegenden Antrittskante (12a) unter einem Winkel ( $\alpha$ ) von weniger als einer Winkelminute in die Dichtfläche (6) über.

FIG. 2

## Gleitringdichtung zur Abdichtung eines gasförmigen Mediums

Die Erfindung betrifft eine Gleitringdichtung zur Abdichtung einer durch eine Wandung herausgeführten umlaufenden Welle gegen den Durchtritt eines gasförmigen Mediums, mit einem drehfest an der Wandung gehaltenen und gegen diese abgedichteten ersten Ringkörper, der eine in einer zur Drehachse der Welle lotrechten Ebene gelegene kreisringförmige erste Stirnfläche aufweist und mit einem drehfest an der Welle gehaltenen und gegen diese abgedichteten zweiten Ringkörper, der eine der ersten Stirnfläche zugekehrte, ebene, kreisringförmige zweite Stirnfläche aufweist, die an der ersten Stirnfläche mit gemeinsamen ringförmigen Dichtflächen (Berührungsflächen) zur Anlage bringbar ist, durch welche eine äußere und eine innere Begrenzungslinie definiert ist, wobei einer der Ringkörper in Richtung der Drehachse verschiebbar ist und durch mindestens eine Feder gegen den anderen Ringkörper vorgespannt ist und wobei aus einer der Sirnflächen mehrere gleichgeformte und mit gleichen Winkelabständen zueinander angeordnete Nuten herausgearbeitet sind, deren beide Kanten jeweils einer Spirallinie folgen und die sich, ausgehend von einem an oder außerhalb der einen der Begrenzungslinien gelegenen äußeren Ende zwischen die Dichtflächen erstrecken, unter einem Winkel von wenigstens 10° zu durch die Drehachse gehenden radialen Geraden verlaufen und mit ihren inneren Enden einen radialen Abstand zu der anderen Begrenzungslinie einhalten, wobei eine relative Drehwegung der beiden Ringkörper gasförmiges Medium zwischen die Dichtflächen eingeschleppt und ein Druckpolster aufgebaut wird, das die Dichtflächen trennt.

Es ist bekannt, derartige spiralförmige Nuten mit im wesentlichen rechteckiger Querschnittsform auszubilden, wobei der Nutboden eben und parallel zur Dichtfläche verläuft. Bekannt sind auch nach Art schräger Kerben in die Dichtfläche eindringende, in der Draufsicht dreieckige Nuten.

Aufgabe der Erfindung ist es, eine Gleitringdichtung der eingangs genannten Art so weiterzubilden, daß eine Drucksteigerung des eingeschleppten gasförmigen Mediums erreicht wird.

Erfindungsgemäß wird diese Aufgabe dadurch gelöst, daß die Tiefe jeder Nut, gemessen jeweils an den tiefsten Stellen von lotrecht zur Nuten-Längsachse geführten Querschnitten, von ihrem äußeren Ende zu ihrem inneren Ende kontinuierlich abnimmt. Die gestellte Aufgabe läßt sich auch dadurch lösen, daß die die Nut begrenzende Fläche an ihrer, bezogen auf die relative Bewegung der beiden Dichtflächen hintenliegende Austrittskante unter einem Winkel von weniger als einer Winkelminute in die Dichtfläche übergeht. Durch jede und insbesondere die Kombination dieser Maßnahmen läßt sich eine bedeutende Drucksteigerung erreichen, so daß ein Trennen der beiden Gleitflächen bei einer geringeren Drehzahl als bei Gleitringdichtungen bekannter Bauart auf tritt, oder, bezogen auf gleiche Drehzahlen diese Trennung der Gleitflächen mit einer geringeren Zahl von Nuten erreichbar wird. Letzterer Umstand erlaubt es auch in Weiterbildung der Erfindung jeweils zwei in Umfangsrichtung aufeinanderfolgende Nuten symmetrisch bezüglich einer die Drehachse der Welle enthaltenden Ebene anzuordnen und auszubilden, so daß die Gleitringdichtung drehrichtungsunabhängig wird.

Weitere Merkmale und Vorteile der Erfindung gehen aus den Unteransprüchen hervor.

Ausführungsbeispiele der Erfindung werden nachstehend an Hand der Zeichnungen erläutert, in denen zeigt:

Fig. 1 einen teilweisen schematischen Querschnitt durch eine Gleitringdichtung;

Fig. 2 eine perspektivische Darstellung eines mit Nuten versehenen Gleitringes, mit einer durch unterbrochene Linien veranschaulichten Modifikation;

Fig. 3 eine perspektivische Darstellung eines mit Nuten versehenen Gleitringes, mit einer durch unterbrochene Linien veranschaulichten Modifikation.

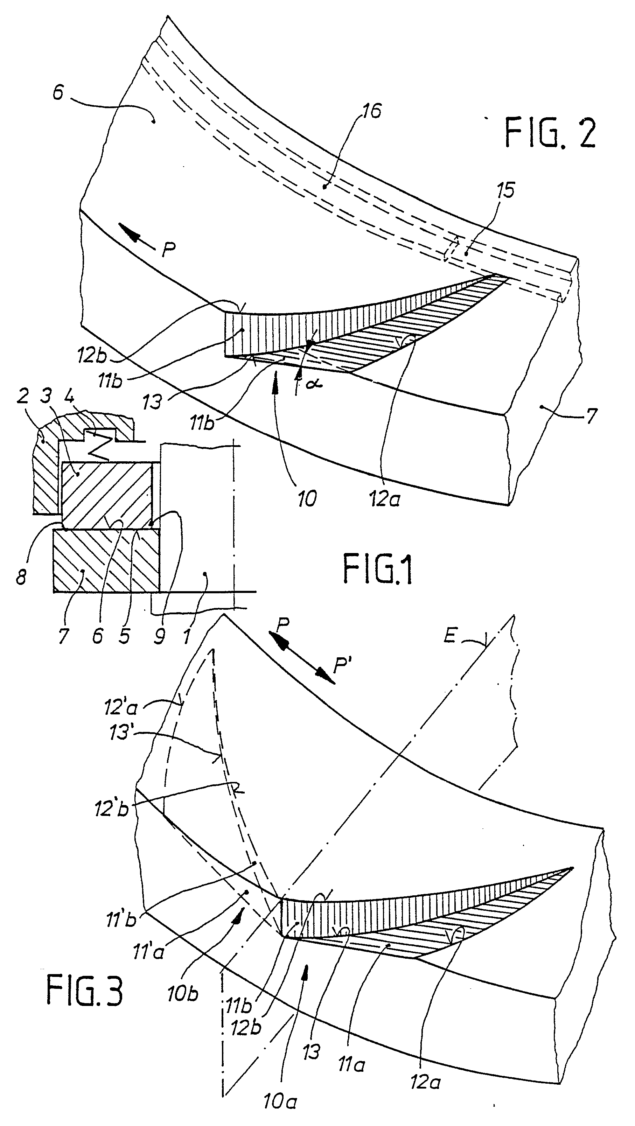

Die in Fig 1 dargestellt Gleitringdichtung dient zur Abdichtung einer Welle 1 an ihrer Durchtrittstelle durch eine Wandung 2. Die Gleitringdichtung enthält einen axial verschieblich an der Wandung 2 gelagerten und gegen diese mittels einer Sekundärdichtung abgedichteten Ringkörper 3, der durch einen nich dargestellten Stift an einer Drehung gehindert ist und durch Federn 4 mit seiner ebenen, kreisringförmigen Stirnfläche 5 gegen die ebene Stirnfläche 6 eines weiteren Ringkörpers 7 angedrückt ist. Der Ringkörper 7 ist unbeweglich an der Welle 1 befestigt und gegen diese abgedichtet. Die Stirnflächen liegen in einer gemeinsamen ringförmigen Dichtfläche (Berührungsfläche) aneinander, welche durch eine äußere Begrenzungslinie 8 und durch eine innere Begrenzungslinie 9 definiert ist.

Aus der Stirnfläche 6 ist eine Mehrzahl von gleichförmig über den Umfang verteilten Nuten 10 herausgearbeitet, von denen eine in Fig. 2 veranschaulicht ist. Die Nut 10 erstreckt sich vom Außenumfang des Ringkörpers bis nahe zu der inneren Begrenzungslinie 9 und weist in Schnitten, die jeweils lotrecht zur Nuten-Längsachse geführt sind, die Form eines rechtwinkeligen Dreiecks auf, dessen Basis mit der Stirnfläche bzw. Dichtfläche 6 fluchtet. Die Nut 10 wird somit von zwei im wesentlichen ebenen Flächen begrenzt, von denen die eine, bezüglich der relativen Bewegungsrichtung P vorneliegende Fläche 11b mit einer maximalen Höhenerstreckung (entsprechend der maximalen Nutentiefe) von 10 μm, gemessen am Außenumfang des Ringkörpers 7, mit einer rechtwinkeligen Kante 12b in die Dichtfläche übergeht, während die andere Fläche 11a unter einem Winkel α von weniger als einer Winkelminute an der anderen Kante, der Austrittskante 12a, in die Dichtfläche übergeht. Die Fläche 11a braucht nicht zwingend eine ebene Fläche zu sein, sondern kann auch eine geringe Wölbung aufweisen und stetig in die Dichtfläche übergehen, so daß eine exakte Austrittskante 12a nicht definierbar ist. Aufgrund der getroffenen Anordnung nähert sich die innere Kante 13, in der sich die beiden Flächen 11a, 11b treffen, und damit auch der Boden der Nut 10 in seiner Gesamtheit, mit zunehmender Annäherung an die radial innengelegene Begrenzungslinie 9 der Dichtfläche 6.

Der Abstand der Kanten 12a, 12b, gemessen in zur Nut-Längsachse lotrechten Schnitten, vermindert sich mit zunehmender Annäherung an die innere Begrenzungslinie. Im Grenzfall können sich die Kanten 12a, 12b auch am inneren Ende der Nut 10 treffen (vergleiche Ausführungsform gemäß Fig. 3). Beide Kanten 12a, 12b weisen eine gekrümmte, vorzugsweise einer Spirallinie entsprechende Form auf, so daß die Nuten 10 bei Draufsicht eine sichelförmige Gestalt besitzen. Wesentlich ist, daß die Längs-Mittelachsen der Nuten 10 unter einem Winkel von wenigstens 10° zu durch die Drehachse gehenden radialen Geraden verlaufen, wobei das äußere (nämlich das nicht von der Stirnseite 5 des anderen Ringes 3 bedeckte) Ende der Nut bezogen auf die Relativbewegung der Ringkörper vorne und das andere, innere Ende zurückversetzt ist, daß der Boden der Nut (Fläche 13) ausgehend vom äußeren Ende fortwährend ansteigt und damit die Tiefe der Nut abnimmt und daß der Boden der Nut (Fläche 13) weiterhin unter einem sehr kleinen Winkel an der bezüglich der Relativbewegung hinten liegenden Kante 12a in die Dichtfläche 6 übergeht. Gemäß einer in Fig. 2 mit unterbrochenen Linien veranschaulichten Modifikation ist jeder Nut 10 an deren inneren Ende eine taschenförmige Vertiefung 15 nachgeschaltet. Wie durch punktierte Linien angegeben, können diese taschenförmigen Vertiefungen durch einen für alle Nuten 10 gemeinsame Ringnut 16 gebildet sein. Die taschenförmigen Vertiefungen 15 bzw. die Ringnut 16 bewirken eine weitere Drucksteigerung.

Eine andere Modifikation, die zu einer drehrichtungsunabhängigen Gleitringdichtung führt, ist mit unterbrochenen Linien in Fig. 3 veranschaulicht. Zu diesem Zweck sind jeweils Paare von Nuten 10a, 10b symmetrisch in Bezug auf eine die Drehachse der Welle 1 enthaltenden Ebene E ausgebildet.

Die Tiefe der Nuten 10, 10a und 10b ist in den Fig. 2 und 3 zur Verdeutlichung übertrieben dargestellt.

## Ansprüche

1. Gleitringdichtung zur Abdichtung einer durch eine Wandung herausgeführten umlaufenden Welle gegen den Durchtritt eines gasförmigen Mediums, mit einem drehfest an der Wandung gehaltenen und gegen diese abgedichteten ersten Ringkörper, der eine in einer zur Drehachse der Welle lotrechten Ebene gelegene kreisringförmige erste Stirnfläche aufweist und mit einem drehfest an der Welle gehaltenen und gegen diese abgedichteten zweiten Ringkörper, der eine der ersten Stirnfläche zugekehrte, ebene, kreisringförmige zweite Stirnfläche aufweist, die an der ersten Stirnfläche mit gemeinsamen ringförmigen Dichtflächen (Berührungsflächen) zur Anlage bringbar ist, durch welche eine äußere und eine innere Begrenzungslinie definiert ist, wobei einer der Ringkörper in Richtung der Drehachse verschiebbar ist und durch mindestens eine Feder gegen den anderen Ringkörper vorgespannt ist und wobei aus einer der Stirnflächen mehrere gleichgeformte und mit gleichen Winkelabständen zueinander angeordnete Nuten herausgearbeitet sind, deren beide Kanten jeweils einer Spirallinie folgen und die sich, ausgehend von einem an oder außerhalb der einen der Begrenzungslinien gelegenen äußeren Ende zwischen die Dichtflächen erstrecken, unter einem Winkel von wenigstens 10° zu durch die Drehachse gehenden radialen Geraden verlaufen und mit ihren inneren Enden einen radialen Abstand zu der anderen Begrenzungslinie einhalten, wobei durch eine relative Drehbewegung der beiden Ringkörper gasförmiges Medium zwischen die Dichtflächen eingeschleppt und ein Druckpolster aufgebaut wird, das die Dichtflächen trennt, **dadurch gekennzeichnet,** daß die Tiefe jeder Nut (10, 10a, 10b), gemessen jeweils an den tiefsten Stellen von lotrecht zur Nuten-Längsachse geführten Querschnitten, von ihrem äußeren Ende zu ihrem inneren Ende kontinuierlich abnimmt.

2. Gleitringdichtung nach Anspruch 1, **dadurch gekennzeichnet,** daß die Querschnittsfläche jeder Nut (10, 10a, 10b) am inneren Ende Null ist.

3. Gleitringdichtung nach Anspruch 1 oder 2, **dadurch gekennzeichnet,** daß die Breite der Nut (10, 10a, 10b) von ihrem äußeren Ende zu ihrem inneren Ende kontinuierlich abnimmt.

4. Gleitringdichtung nach Anspruch 1, **dadurch gekennzeichnet,** daß die die Nut (10, 10a, 10b) begrenzende Fläche (11a) an ihrer bezogen auf die relative Bewegung (P, P') der beiden Dichtflächen (5,6) hinten liegende Austrittskante (12a, 12 a) unter einem Winkel (α) von weniger als einer Winkelminute in die Dichtfläche (6) übergeht.

5. Gleitringdichtung nach Anspruch 1 oder 3, **dadurch gekennzeichnet,** daß sich an das innere Ende jeder Nut (10, 10a, 10b) eine taschenförmige Vertiefung (15) anschließt, deren Tiefe mindestens um den Faktor 10 größer als die Tiefe der Nut an ihrer tiefsten Stelle ist.

6. Gleitringdichtung nach Anspruch 5, **dadurch gekennzeichnet,** daß die taschenförmigen Vertiefungen (15) aller Nuten (10) durch eine gemeinsame Ringnut (16) verbunden oder gebildet sind.

7. Gleitringdichtung nach einem der Ansprüche 1-6. **dadurch gekennzeichnet,** daß jeweils zwei in Umfangrichtung aufeinanderfolgende Nuten (10a,10b) symmetrisch bezüglich einer die Drehachse der Welle(1) enthaltenden Ebene (E) angeordnet und ausgebildet sind.

8. Gleitringdichtung nach Anspruch 7, **dadurch gekennzeichnet,** daß die äußeren Enden eines symmetrisch angeordneten Paares von Nuten (10a, 10b) unmittelbar aufeinanderfolgen oder sich teilweise überdeckend angeordnet sind.

FIG. 2

FIG.1

FIG.3